# EUROPEAN PATENT SPECIFICATION

(11) **EP 2 470 595 B1**
(45) Date of publication and mention of the grant of the patent: **25.09.2013**
(21) Application number: 10763275.4
(22) Date of filing: 29.09.2010
(51) Int. Cl.: C08K 5/103, C08K 5/1515, C08L 27/06, H01B 3/44

(54) **ACETYLATED GLYCERIN ESTERS AND THEIR BLENDS WITH EPOXIDIZED FATTY ACID ESTERS**
ACETYLIERTE GLYCERINESTER UND GEMISCHE DARAUS MIT EPOXIDISIERTEN FETTSÄUREESTERN
ESTERS DE GLYCÉRINE ACÉTYLÉE ET LEURS MÉLANGES AVEC DES ESTERS D'ACIDE GRAS ÉPOXYDÉ

(30) Priority: 30.09.2009 US 247427 P
(43) Date of publication of application: 04.07.2012
(73) Proprietor: Dow Global Technologies LLC, Midland, MI 48674 (US)
(72) Inventor: CHAUDHARY, Bharat, I., Princeton, NJ 08540 (US); SCHILLER, Klaus, Halle 06120 (DE); SCZEKALLA, Beate, Kabelsketal-Zwintschoena 06184 (DE); MEERBOTE, Michael, Gutenberg 06193 (DE)
(74) Representative: Hayes, Adrian Chetwynd
(86) International application number: PCT/US2010/050654
(87) International publication number: WO 2011/041363

(56) References cited:
- WO-A1-97/30115
- WO-A1-2008/081330
- JP-A- 2004 311 064
- US-A- 4 426 477

## Description

### BACKGROUND

Plasticizers are compounds or mixtures of compounds that are added to polymer resins to impart softness and flexibility. Phthalic acid diesters (also known as "phthalates") are known plasticizers in many flexible polymer products, such as polymer products formed from polyvinyl chloride (PVC) and other vinyl polymers. Examples of common phthalate plasticizers include di-isononyl phthalate (DINP), diallyl phthalate (DAP), di-2-ethylhexyl-phthalate (DEHP), dioctyl phthalate (DOP) and diisodecyl phthalate (DIDP). Other common plasticizers, used for high temperature applications, are trimellitates and adipic polyesters. Mixtures of plasticizers are often used to obtain optimum properties.

Phthalate plasticizers have recently come under intense scrutiny by public interest groups that are concerned about the negative environmental impact of phthalates and potential adverse health effects in humans (especially children) exposed to phthalates.

Consequently, a need exists for phthalate-free plasticizers for polymer resins. A need further exists for phthalate-free plasticized polymers that have the same, or substantially the same, chemical, mechanical, and/or physical properties as polymers containing phthalate plasticizers.

### SUMMARY

The present invention provides, a coated conductor. The coated conductor includes a conductor and a coating on the conductor. The coating includes a vinyl chloride resin and a plasticizer composition comprising glycerin diacetate monolaurate and optionally an epoxidized fatty acid ester or other plasticizer.

An advantage of the present disclosure is an environmentally safe plasticizer for polymer resins.

An advantage of the present disclosure is a phthalate-free plasticizer with low, or no, adverse health risk to humans.

An advantage of the present disclosure is a phthalate-free plasticizer which provides the same, or substantially the same, properties to a polymer resin as the same polymer resin containing a phthalate-containing plasticizer.

An advantage of the present disclosure is a coating for wire and cable that is phthalate-free.

### DETAILED DESCRIPTION

As used with respect to a chemical compound, unless specifically indicated otherwise, the singular includes all isomeric forms and vice versa (for example, "hexane", includes all isomers of hexane individually or collectively). The terms "compound" and "complex" are used interchangeably to refer to organic-, inorganic- and organometal compounds. The term, "atom" refers to the smallest constituent of an element regardless of ionic state, that is, whether or not the same bears a charge or partial charge or is bonded to another atom. The term "amorphous" refers to a polymer lacking a crystalline melting point as determined by differential scanning calorimetry (DSC) or equivalent technique.

The terms "comprising", "including", "having" and their derivatives are not intended to exclude the presence of any additional component, step or procedure, whether or not the same is specifically disclosed. In order to avoid any doubt, all compositions claimed through use of the term "comprising" may include any additional additive, adjuvant, or compound whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed. The term "or", unless stated otherwise, refers to the listed members individually as well as in any combination.

"Composition" mean a mixture or blend of two or more components.

"Blend," "polymer blend" mean a blend of two or more polymers, as well as blends of polymers with various additives. Such a blend may or may not be miscible. Such a blend may or may not be phase separated. Such a blend may or may not contain one or more domain configurations, as determined from transmission electron spectroscopy, light scattering, x-ray scattering, and any other method known in the art.

The term "polymer" is a macromolecular compound prepared by reacting (*i.e*., polymerizing) monomers of the same or different type. "Polymer" includes homopolymers and copolymers.

In an embodiment, the compositions disclosed herein are phthalate-free. The term "phthalate-free composition," as used herein, is a composition devoid of phthalate or is otherwise free of phthalate. A "phthalate," is a compound which includes the following structure (I):

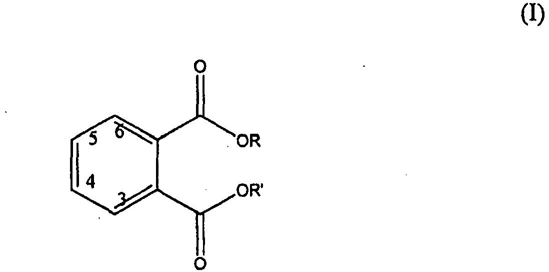

wherein R and R' may be the same or different. Each of R and R' is selected from a substituted-/unsubstituted-hydrocarbyl group having 1 to 20 carbon atoms. As used herein, the term "hydrocarbyl" and "hydrocarbon" refer to substituents containing only hydrogen and carbon atoms, including branched or unbranched, saturated or unsaturated, cyclic, polycyclic, fused, or acyclic species, and combinations thereof. Nonlimiting examples of hydrocarbyl groups include alkyl-, cycloalkyl-, alkenyl-, alkadienyl-, cycloalkenyl-, cycloalkadienyl-, aryl-, aralkyl, alkylaryl, and alkynyl- groups. Each position 3, 4, 5, and 6 may be populated by hydrogen or other moiety.

The present disclosure provides a coated conductor, wherein the plasticiser composition compises glycerin diacetate monolaurate and is a composition containing one, two, three, or more plasticizers. In an embodiment, a composition (or a plasticizer composition) is provided and includes a first plasticizer and a second plasticizer. The first plasticizer includes an acetylated glycerin ester. The term "acetylated glycerin ester," as used herein refers to acetylated glyceride of fatty acid, and is represented by the following formula (II):

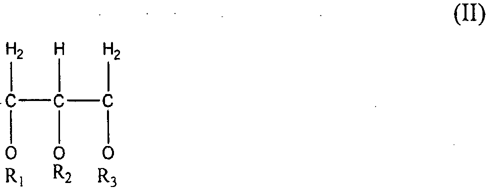

wherein R₁, R₂ and R₃ each individually represent an acetyl group or a hydrogen atom and at least one of R₁-R₃ comprises a fatty acid moiety with 4 to 22 carbon atoms. In an embodiment, at least one of the R groups is an acetyl group. In a further embodiment, at least two R groups are acetyl groups. In an embodiment, the acetylated glycerin ester comprises one or more of acetylated monoglyceride of fatty acid, acetylated diglyceride of fatty acid, acetylated triglyceride of fatty acid, glycerol, triacetin (glycerin triacetate), and any combination thereof.

The present disclosure is directed to glycerin esters and processes for producing the same. In an embodiment, a process for producing an acetylated glycerin ester is provided. The process includes forming a glycerin ester. The glycerin ester is subsequently acetylated to form an acetylated glycerin ester. The acetylated glycerin esters disclosed herein are phthalate-free.

The process includes forming a glycerin ester. The formation of glycerin ester occurs by way of (i) esterification between a glycerin and a fatty acid or (ii) transesterification between a glycerin and a triglyceride. A "fatty acid," as used herein, is a monocarboxylic acid composed of an aliphatic chain containing predominantly 4 to 22 carbon atoms with a terminal carboxyl group (COOH). The fatty acid can be saturated or unsaturated, branched or unbranched, and may or may not include one or more hydroxyl group(s).

In an embodiment, the fatty acid contains predominantly from 8 to 22 carbon atoms. Nonlimiting examples of suitable fatty acids include caprylic acid (C8), capric acid (C10), lauric acid (C12), myristic acid (C14), palm kernel oil (a mixture of C8-C22 fatty acids and primarily lauric acid and myristic acid), coconut oil (a mixture of C8-C22 fatty acids, primarily lauric acid and myristic acids), castor oil (a mixture of various fatty acids, predominantly ricinoleic acid), hydrogenated castor oil (a mixture of various fatty acids, predominantly hydrogenated ricinoleic acid), and any combination of the foregoing.

The glycerin ester is acetylated. The term "acetylating" or "acetylation," as used herein, is the process of introducing an acetyl group into the molecule of a compound having -OH groups. In other words, acetylation replaces H of the -OH groups with CH₃CO-groups. Acetylation may also occur with the fatty acid component when the fatty acid component includes a hydroxyl group. Nonlimiting examples of suitable acetylation reagents include acetic anhydride and acetyl chloride. Thus, an "acetylated glycerin ester" (or "AGE") is a glycerin ester that has been subjected to an acetylation reaction. Nonlimiting examples of AGE are Rikemal^{®} PL 002, Rikemal^{®} PL-012 and Rikemal^{®} PL-014 (CAS number 30899-62-8), available from Riken Vitamin; and Grindsted Soft-N-Safe^{®} acetylated monoglyceride of hydrogenated castor oil, (CAS number 736150-63-3) available from Danisco.

Some, substantially all, or all, of the -OH groups of the glycerin ester may be acetylated. The total amount of the acetyl groups is in the range of 2.7 to 3.0 mol per mol of glycerin, or 2.9 to 3.0 mol per mol of glycerin. The acetylation results in an acetylated glycerin ester having a hydroxyl number from 0 to less than 100, or from 0 to less than 15, or from 0 to less than 10, or from 0 to less than 5, or from 0 to less than 2, or 0. The hydroxyl number is determined in accordance with DIN 53240.

In an embodiment, the acetylated glycerin ester has a viscosity from 10 mPas to 300 mPas, or from 20 mPas to 200 mPas. Viscosity is measured in accordance with ASTM D445 (Brookfield, 25°C).

In an embodiment, the acetylated glycerin ester has a solution temperature from 140°C to 200°C, or 150°C to 180°C as measured in accordance with DIN 53408.

In an embodiment, the acetylated glycerin ester has an APHA color from 0 to 3000, or from 0 to 1000, or from 0 to 500.

The acetylated glycerin ester is glycerin diacetate monolaurate (or GDM). In an embodiment, the GDM comprises acetylated monoglyceride of lauric acid, acetylated diglyceride of lauric acid, acetylated triglyceride of lauric acid, glycerol, triacetin (glycerin triacetate), and any combination thereof. The glycerin diacetate monolaurate has a hydroxyl value from 0 to less than 100, or from 0 to less than 15, or from 0 to less than 5, or from 0 to 2, or 0. In an embodiment, the glycerin diacetate monolaurate has a viscosity from 10 mPas to 300 mPas, or from 20 mPas to 200 mPas. Viscosity is measured in accordance with ASTM D445 (Brookfield, 25°C).

In an embodiment, the glycerin diacetate monolaurate has a solution temperature from 140°C to 200°C, or 150°C to 180°C as measured in accordance with DIN 53408.

In an embodiment, the acetylated glycerin diacetate monolaurate has an APHA color from 0 to 3000, or from 0 to 1000, or from 0 to 500.

The acetylated glycerin ester (AGE) may contain significant amount of insoluble component. The term "insoluble component," as used herein, is one or more compounds that phase separate out of the AGE over time, especially when held at room temperature and below. The AGE is a liquid at room temperature and the insoluble component may phase separate out of the liquid phase AGE as a solid phase. The insoluble component turns the AGE cloudy and settles to the bottom. The lower the temperature, the more insolubles are formed. Furthermore, the quality of raw materials (such as glycerol, fatty acid and triglyceride) used to make the AGE has an effect on the amount of insolubles formed after acetylation, as well as the color of the AGE.

The AGE may be subjected to a purification process to reduce the color and decrease the amount of insolubles. A "purification process," as used herein, is the application of one or more of the following procedures to the AGE: a filtration procedure, a centrifugation procedure, a sedimentation procedure, treatment with additives [such as silicon dioxide (SiO₂), aluminum oxide (Al₂O₃), activated carbon, Perlite (naturally occurring amorphous siliceous volcanic rock), diatomaceous earth] and combinations thereof. Any of these procedures may optionally be performed at a temperature from 5°C to 50°C and holding at this temperature for at least 3 hours. The additives may be used to aid the filtration step and may also result in desirably lighter color of the AGE. The purification process removes, wholly or partially, any insoluble components present in the AGE and can also result in desirably lighter color. Treatment of the AGE with additives, followed by filtration, can also be performed at temperatures as high as 150°C to result in lighter color, without necessarily decreasing the amount of insolubles. With removal of the solid phase from the AGE and/or lighter color, the resultant filtrate from the purification process is clear and has low, or no, turbidity. A "purified AGE" is an AGE that has been subjected to at least one of the foregoing purification processes and exhibits at least one of the following properties: lighter color, fewer (or no) insoluble components, and/or less (or no) turbidity compared to the AGE prior to purification.

In addition to the first plasticizer, the present composition also includes a second plasticizer. In an embodiment, the second plasticizer is an epoxidized fatty acid ester (EFA). The term "epoxidized fatty acid ester," as used herein, is a compound with at least one fatty acid moiety which contains at least one epoxide group. An "epoxide group" is a three-membered cyclic ether (also called oxirane or an alkylene oxide) in which an oxygen atom is joined to each of two carbon atoms that are already bonded to each other. Nonlimiting examples of suitable epoxidized fatty acid esters include epoxidized animal and vegetable oils, such as naturally occurring epoxidized oils, epoxidized soybean oil (ESO), epoxidized propylene glycol dioleate, epoxidized corn oil, epoxidized sunflower oil, epoxidized palm oil, epoxidized linseed oil, epoxidized canola oil, epoxidized rapeseed oil, epoxidized safflower oil, epoxidized tall oil, epoxidized tung oil, epoxidized fish oil, epoxidized beef tallow oil, epoxidized castor oil, epoxidized methyl stearate, epoxidized butyl stearate, epoxidized 2-ethylhexyl stearate, epoxidized stearyl stearate, 3,4-epoxycyclohexylmethyl-3,4-epoxycyclohexane carboxylate epoxidized soybean oil, epoxidized fatty acid methyl esters, epoxidized derivatives of each of the foregoing, and any combination of the foregoing. A nonlimiting example of naturally occurring epoxidized oil is Vernonia oil.

The second plasticizer may also include epoxidized polybutadiene, tris(epoxypropyl)isocyanurate, bisphenol A diglycidyl ether, vinylcyclohexene diepoxide, dicyclohexene diepoxide, and any combination thereof.

The epoxidized fatty acid ester can be prepared in a variety of ways. For example, natural oils can be used as the starting material. In this instance, the natural oils may be saponified to the fatty acids and then esterified with alcohols. Next, the low molecular weight esters are epoxidized. The unsaturated ester can be epoxidized with a per-acid.

Alternatively, a glycidyl ester of the fatty acid can be prepared via epichlorohydrin or related chemicals. In yet another alternate, it is possible to transesterify the triglyceride with alcohols and then epoxidize the unsaturated fatty ester with a per-acid.

In an embodiment, the epoxidized fatty acid ester can be any epoxidized fatty acid C₁-C₁₄ ester, including methyl, ethyl, propyl, butyl, and 2-ethylhexyl esters. In a further embodiment, the epoxidized fatty acid ester is an epoxide of a fatty acid methyl ester.

A nonlimiting example for the preparation of an epoxide of a fatty acid methyl ester begins with soy oil, wherein the soy oil is transesterified with methanol to make the methyl ester of the fatty acids in the oil. Glycerol is removed from the reaction products due to insolubility. A solution of per-acetic acid in ethyl acetate is used to epoxidize the double bonds on the fatty acids. The per-acid is kept below 35% per-acid and 35 degrees Celsius to prevent detonation. After completion, the ethyl acetate and product acetic acid are removed via vacuum stripping.

In an embodiment, the epoxidized fatty acid ester is epoxidized soybean oil.

In an embodiment, the composition (or plasticizer composition) is an AGE/EFA mixture. The AGE/EFA may be referred to as a "AGE/EFA plasticizer." The AGE/EFA plasticizer may include from 1 wt % to 100 wt % acetylated glycerin ester and from 99 wt % to 0 wt % EFA, or from 30 wt % to 99 wt % acetylated glycerin ester and from 70 wt % to 1 wt % EFA (based on the total weight of the plasticizer composition).

A "plasticizer composition" or "plasticizer" is a substance that lowers the modulus and tensile strength, and increases flexibility, elongation, impact strength, and tear strength of the polymeric resin (typically a thermoplastic polymer) to which it is added. A plasticizer may also lower the melting point of the polymeric resin, lower the glass transition temperature and enhancing processability of the polymeric resin to which it is added.

The plasticizer composition may include one or more AGE and/or one or more EFA. The plasticizer composition includes a glycerin diacetate monolaurate (GDM) having a hydroxyl number from 0 to less than 100, or from 0 to less than 15, or from 0 to less than 10, or from 0 to less than 5, or from 0 to less than 2, or 0, and epoxidized soybean oil (ESO). In a further embodiment, the GDM of the plasticizer composition has a hydroxyl number of 0 and the plasticizer composition also includes ESO.

In an embodiment the plasticizer composition includes a blend of (i) the GDM and (ii) an epoxidized fatty acid ester (EFA).

In an embodiment, the plasticizer composition includes an acetylated glycerin ester, a first EFA, and a second EFA. The second EFA is different than the first EFA. In a further embodiment, the plasticizer composition includes an acetylated glycerin ester, ESO, and an epoxidized propylene glycol dioleate. In yet another embodiment, the plasticizer composition includes an acetylated glycerin ester, ESO, and an epoxidized fatty acid methyl ester.

Although the composition of this disclosure may be phthalate-free, in an embodiment, the plasticizer composition may also comprise other plasticizers including phthalates (such as di-isononyl phthalate, diallyl phthalate, di-2-ethylhexyl-phthalate, dioctyl phthalate, diisodecyl phthalate and diisotridecyl phthlate), trimellitates (such as trioctyl trimellitate, triisononyl trimellitate and triisodecyl trimellitate), citrates, Hexamoll^{®} DINCH diisononyl ester of 1,2-Cyclohexanedicarboxylic acid (product of BASF), benzoates and adipic polyesters.

The present disclosure provides a coated conductor, wherein the coating is a polymeric composition wherein the polymeric resin is a vinylchloride resin. In an embodiment, a polymeric composition is provided which includes a polymeric resin and the present plasticizer composition containing one, two, three, or more plasticizers. The plasticizer composition may be any acetylated glycerin ester alone or in combination with any one or more EFA as disclosed herein. The polymeric composition contains from 1 wt % to 99 wt %, or from 30 wt % to 90 wt %, or from 40 wt % to 80 wt % polymeric resin, and from 99 wt % to 1 wt %, or from 70 wt % to 10 wt %, or from 60 wt % to 20 wt % of the plasticizer composition. Weight percent is based on total weight of the composition.

The term "vinyl chloride resin," as used herein, is a vinyl chloride polymer, such as polyvinyl chloride (PVC), or a vinyl chloride copolymer such as vinyl chloride/vinyl acetate copolymer, vinyl chloride/vinylidene chloride copolymer, vinyl chloride/ethylene copolymer or a copolymer prepared by grafting vinyl chloride onto ethylene/vinyl acetate copolymer. The resin composition can also include a polymer blend of the above-mentioned vinyl chloride polymer or vinyl chloride copolymer with other miscible or compatible polymers including chlorinated polyethylene, thermoplastic polyurethane, olefin polymers such as a methacryl polymer or acrylonitrile-butadiene-styrene polymer (ABS resin).

In an embodiment, the vinyl chloride resin is polyvinyl chloride (PVC).

In an embodiment, the polymeric composition is a thermoplastic composition. A "thermoplastic composition," as used herein, is a polymeric composition (1) that has the ability to be stretched beyond its original length and retract to substantially its original length when released and (2) softens when exposed to heat and returns to substantially its original condition when cooled to room temperature.

In an embodiment, the polymeric composition includes the polymeric resin and a plasticizer including one or more acetylated glycerin ester, optionally a first EFA, and optionally a second EFA.

In an embodiment, the plasticizer composition has a solution temperature from 140°C to 200°C as measured in accordance with DIN 53408. Applicants have surprisingly discovered that the plasticizer composition composed of acetylated glycerin ester and optionally EFA unexpectedly provides a plasticizer with low viscosity and low volatility, which is particularly suitable for high temperature wire and cable applications, and which does not migrate out of a thermoplastic polymer in which it is incorporated. In addition, the solution temperature (of 140°C-200°C) for the present plasticizer composition is similar to the solution temperature of conventional high molecular weight plasticizers and some conventional phthalate plasticizers (typically between 140°C and 180°C). Moreover, the viscosity of the present plasticizer composition is less than the viscosity of conventional high molecular weight plasticizers, such as adipic polyester plasticizers. For example, adipic polyester plasticizers, known commercially as Ultramoll^{®} IV and Ultramoll^{®} III adipic polyesters (products of Lanxess) have very high viscosity ( 6000 to 6500 mPa s at 25°C). It is known that the lower the viscosity of a plasticizer, the faster is its uptake into PVC powder. Hence, the present plasticizer composition is absorbed into PVC at a faster rate than adipic polyester plasticizers, and even phthalates or trimellitates of lower or similar viscosity. The present plasticizer composition exhibits an unexpected synergy between low viscosity and medium molecular weight and yields a phthalate-free, safe, plasticized PVC with physical, chemical, and mechanical properties that meet and/or exceed the properties of PVC resins plasticized with conventional adipic polyester plasticizers or conventional phthalate-based plasticizers or conventional trimellitate-based plasticizers. Especially noteworthy is the retention of tensile properties exhibited by the present composition after oven aging for 168 hours at temperatures as high as 113°C or 136°C.

The present polymeric composition exhibits the same, or better, flexibility and/or elongation when compared to polymer resins containing conventional adipic polyester, phthalate, and/or trimellitate plasticizers. In an embodiment, the present polymeric composition is a blend of PVC and an GDM/EFA plasticizer and has a Shore hardness from A60 to A100, or from A70 to A95. In an embodiment, the polymeric composition has a Shore hardness from D10 to D70, or from D20 to D60. Shore hardness is measured in accordance with ASTM D2240.

In an embodiment, the polymeric composition is a blend of PVC and GDM/EFA plasticizer composition and has a glass transition temperature ("Tg") from 10°C to 60°C, or from 20°C to 50°C.

In an embodiment, the polymeric composition is composed of a blend of PVC and a plasticizer composition composed of AGE and EFA. The polymeric composition is molded into a plaque. The plaque has a tensile strength retention greater than 70% after 168 hours heat aging at 113°C as measured on dogbones cut from 762 µm (30 mil) thick plaques in accordance with ASTM D638.

In an embodiment, the polymeric composition is composed of a blend of PVC and a plasticizer composition composed of AGE and EFA. The polymeric composition is molded into a plaque. The plaque has a tensile strength retention greater than 70% after 168 hours heat aging at 136°C as measured on dogbones cut from 762 µm (30 mil) thick plaques in accordance with ASTM D638.

In an embodiment, the polymeric composition is composed of a blend of PVC and a plasticizer composition composed of AGE and EFA. The polymeric composition is molded into a plaque. The plaque has a tensile elongation retention greater than 30% after 168 hours heat aging at 113°C as measured on dogbones cut from 762 µm (30 mil) thick plaques in accordance with ASTM D638.

In an embodiment, the polymeric composition is composed of a blend of PVC and a plasticizer composition composed of AGE and EFA. The polymeric composition is molded into a plaque. The plaque has a tensile elongation retention greater than 30% after 168 hours heat aging at 136°C as measured on dogbones cut from 762 µm (30 mil) thick plaques in accordance with ASTM D638.

The tensile strength and tensile elongation are measured for (i) unaged and (ii) heat aged specimens cut from compression molded plaques in accordance with ASTM D-638.

Any of the foregoing polymeric compositions may include one or more of the following additives: a filler, an antioxidant, a flame retardant (antimony trioxide, molybdic oxide and alumina hydrate), a heat stabilizer, an anti-drip agent, a colorant, a lubricant, a low molecular weight polyethylene, a hindered amine light stabilizer (having at least one secondary or tertiary amine group) ("HALS"), UV light absorbers (such as o-hydroxyphenyltriazines), curing agents, boosters and retardants, processing aids, coupling agents, antistatic agents, nucleating agents, slip agents, viscosity control agents, tackifiers, anti-blocking agents, surfactants, extender oils, acid scavengers, metal deactivators, and any combination thereof.

In an embodiment, the polymeric composition includes a filler. Nonlimiting examples of suitable fillers include calcium carbonate, calcined clay, whiting, fuller's earth, magnesium silicate, barium sulfate, calcium sulfate, strontium sulfate, titanium dioxide, magnesium oxide, magnesium hydroxide, calcium hydroxide, hydrophilic fumed silica, hydrophobic (surface treated) fumed silica, and any combination of the foregoing. Nonlimiting examples of calcined clay are Satintone^{®} SP-33 and Polyfil^{®} 70.

In an embodiment, the polymeric composition includes an antioxidant. Nonlimiting examples of suitable antioxidants include hindered phenols such as tetrakis[methylene(3,5-di-tert-butyl-4-hydroxyhydro-cinnamate)] methane; bis[(beta-(3,5-ditert-butyl-4-hydroxybenzyl)-methylcarboxyethyl)]sulphide, 4,4'-thiobis(2-methyl-6-tert-butylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; polymerized 2,2,4-trimethyl-1,2-dihydroquinoline, n,n'-bis(1,4-dimethylpentyl-p-phenylenediamine), alkylated diphenylamines, 4,4'-bis(alpha, alphadimethylbenzyl)diphenylamine, diphenyl-p-phenylenediamine, mixed di-aryl-p-phenylenediamines, and other hindered amine anti-degradants or stabilizers. Nonlimiting examples of suitable antioxidants include Topanol^{®} CA, Vanox^{®} 1320, Irganox^{®} 1010, Irganox^{®} 245 and Irganox^{®} 1076. The antioxidant or antioxidants may be added to the plasticizer composition of this disclosure. Antioxidants can be used in amounts of 0.01 to 5 wt % based on the weight of the polymeric composition.

In an embodiment, the polymeric composition includes a heat stabilizer. Nonlimiting examples of suitable heat stabilizers include lead-free mixed metal heat stabilizers, lead stabilizers, organic heat stabilizers, epoxides, salts of monocarboxylic acids, phenolic antioxidants, organic phosphites, hydrotalcites, zeolites, perchlorates and/or betadiketones. Nonlimiting examples of suitable betadiketones are dibenzoylmethane, palmitoyl benzoyl methane, stearoyl benzoyl methane and mixtures thereof. A nonlimiting example of suitable dibenzoylmethane is Rhodiastab^{®} 83. A nonlimiting example of suitable mixtures of palmitoyl benzoyl methane and stearoyl benzoyl methane is Rhodiastab^{®} 50. Nonlimiting examples of suitable lead-free mixed metal heat stabilizers include Mark^{®} 6797, Mark^{®} 6776 ACM, Mark^{®} 6777 ACM, Therm-Chek^{®} RC215P, Therm-Chek^{®} 7208, Naftosafe^{®} EH-314, Baeropan^{®} MC 90400 KA, Baeropan^{®} MC 90400 KA/1, Baeropan^{®} MC8553 KA-ST 3-US, Baeropan^{®} MC 9238 KA-US, Baeropan^{®} MC 90249 KA, and Baeropan^{®} MC 9754 KA. The heat stabilizer or heat stabilizers may be added to the plasticizer composition of this disclosure. Heat stabilizers can be used in amounts of 0.1 to 10 wt % based on the weight of the polymeric composition.

In an embodiment, the polymeric composition includes a lubricant. Nonlimiting examples of suitable lubricants include stearic acid, metal salts of stearic acid, paraffin wax, and polyethylene glycols. The lubricants may be used alone or in combination. The lubricant may also be combined with the heat stabilizer.

In an embodiment, the polymeric composition includes a processing aid. Nonlimiting examples of suitable processing aids include metal salts of carboxylic acids such as zinc stearate or calcium stearate; fatty acids such as stearic acid, oleic acid, or erucic acid; fatty amides such as stearamide, oleamide, erucamide, or N,N'-ethylene bis-stearamide; polyethylene wax; oxidized polyethylene wax; polymers of ethylene oxide; copolymers of ethylene oxide and propylene oxide; vegetable waxes; petroleum waxes; non ionic surfactants; and polysiloxanes. Processing aids can be used in amounts of 0.05 to 5 wt% based on the weight of the polymeric composition.

The polymeric compositions are generally prepared according to conventional dry blend or wet blend methods known to those skilled in the art of PVC compounding. The mixtures obtained from the blending process can be further compounded with a mixer such as a Banbury batch mixer, a Farrel Continuous Mixer, or a single or twin screw extruder.

In an embodiment, the present polymeric composition is made by absorption of the plasticizers of this disclosure in PVC powder to make a dry blend. Any suitable method/apparatus may be used to make the dry blend including, but not limited to, a Henschel mixer or a ribbon blender. The polymeric composition may contain other additives in addition to the PVC and the plasticizer. The dry blend may then be further compounded (via melt extrusion for example) and formed into any desired shape (film, pellet, etc.).

The present polymeric composition(s) may comprise two or more embodiments disclosed herein.

With an optimal stabilizer and antioxidant package, the present polymeric compositions of this disclosure are suitable for applications requiring long term dry or wet insulation resistance testing at elevated temperatures, and other demanding applications where temperatures are as high as 136°C (either in air or while immersed in oils).

The surprising properties of flexibility, low plasticizer volatility, low migration, low viscosity and/or high solution temperature exhibited by the present polymeric composition make it well suited for wire and cable coating applications, and high temperature wire/cable applications in particular. Accordingly, the present disclosure provides a coated conductor. A "conductor" is an element of elongated shape (wire, cable, fiber) for transferring energy at any voltage (DC, AC, or transient). The conductor is typically at least one metal wire or at least one metal cable (such as aluminum or copper) but may include optical fiber.

In an embodiment, a coated conductor is provided and includes a conductor and a coating on the conductor. The coating is composed of the present polymeric composition which includes the polymeric resin and the present plasticizer composition containing one, two, three, or more plasticizers. The polymeric resin of the coating may be any polymeric resin disclosed herein. The plasticizer composition may be any plasticizer composition composed of one or more acetylated glycerin ester alone or blended with one or more EFA, and/or blend with one or more other plasticizers as disclosed herein.

A "metal conductor," as used herein, is at least one metal wire and/or at least one metal cable. The coated metal conductor may be flexible, semi-rigid, or rigid. The coating (also referred to as a "jacket" or a "sheath" or "insulation") is on the metal conductor or on another polymeric layer around the conductor. The coating includes the present composition. The composition may be any composition as disclosed herein. As used herein, "on" includes direct contact or indirect contact between the coating and the metal conductor. "Direct contact" is a configuration whereby the coating immediately contacts the metal conductor, with no intervening layer(s) and/or no intervening material(s) located between the coating and the metal conductor. "Indirect contact" is a configuration whereby an intervening layer(s) and/or an intervening structure(s) and/or intervening material(s) is/are located between the metal conductor and the coating. The coating may wholly or partially cover or otherwise surround or encase the metal conductor. The coating may be the sole component surrounding the metal conductor. Alternatively, the coating may be one layer of a multilayer jacket or sheath encasing the metal conductor.

The polymeric resin is a vinyl chloride resin such as PVC as discussed above. The PVC is blended with the plasticizer composition to form the coating. The coating may include additional components. In an embodiment, the coating includes from 1 wt % to 99 wt % or from 20 wt % to 80 wt %, or from 30 wt% to 70 wt % PVC and from 99 wt % to 1 wt %, or from 80 wt % to 20 wt %, or from 70 wt % to 30 wt % plasticizer composition. In a further embodiment, the coating contains from 30 wt % to 90 wt % PVC and from 70 wt % to 10 wt% of the plasticizer composition.

The plasticizer composition may be any plasticizer composition disclosed herein. In an embodiment, the acetylated glycerin ester present in the coating has a hydroxyl number from 0 to less than 100, or from 0 to less than 15, or from 0 to less than 10, or from 0 to less than 5, or from 0 to less than 2, or 0.

The coating may have any of the properties as discussed above for the present composition. In an embodiment, the coated conductor passes the heat test as measured in accordance with UL-1581. In another embodiment, the plasticizer composition in the coating has a solution temperature from 140°C to 170°C. In another embodiment, the coating has a Shore hardness from A60 to A100 as measured in accordance with ASTM D2240. In another embodiment, the coating has a Shore hardness from D10 to D70 as measured in accordance with ASTM D 2240. In an embodiment, the coating includes from 30 wt % to 90 wt % of polyvinyl chloride and from 70 wt % to 10 wt% of acetylated glycerin ester or mixture of acetylated glycerin ester and EFA.

Nonlimiting examples of suitable coated metal conductors include flexible wiring such as flexible wiring for consumer electronics, a power cable, a power charger wire for cell phones and/or computers, computer data cords, power cords, appliance wiring material, building wire, automotive wire, and consumer electronic accessory cords.

The present coated conductor may comprise two or more embodiments disclosed herein.

The coated conductor, such as a coated wire or a coated cable (with an optional insulation layer), with a jacket comprising the composition disclosed herein can be prepared with various types of extruders, *e.g*., single or twin screw types. A description of a conventional extruder can be found in U.S. Patent No. 4,857,600. An example of co-extrusion and an extruder can be found in U.S. Patent No. 5,575,965. A typical extruder has a hopper at its upstream end and a die at its downstream end. The hopper feeds into a barrel, which contains a screw. At the downstream end, between the end of the screw and the die, there is a screen pack and a breaker plate. The screw portion of the extruder is considered to be divided up into three sections, the feed section, the compression section, and the metering section, and two zones, the back heat zone and the front heat zone, the sections and zones running from upstream to downstream. In the alternative, there can be multiple heating zones (more than two) along the axis running from upstream to downstream. If it has more than one barrel, the barrels are connected in series. The length to diameter ratio of each barrel is in the range of 15:1 to 30:1.

The wire and cable constructions (*i.e*., a coated metal conductor) of this disclosure are made by extruding the present polymeric composition onto the conductor or onto the bundle of insulated conductors to form a coating (or a jacket) around the insulated conductors. The thickness of the jacket or insulation depends on the requirements of the desired end use application. Typical thickness of the jacket or insulation is from 0.254mm to 5.08mm (0.010 inches to 0.200 inches), or from 0.381mm to 1.27mm (0.015 inches to 0.050 inches). The present polymeric composition may be extruded into the jacket from previously made composition. Usually the present composition is in the form of pellets for easy feeding into the extruder. The wire and cable jacket or insulation may be extruded directly from the compounding extruder without going through the separate step of pelletizing the present composition. This one-step compounding/extrusion process would eliminate one heat history step for the composition.

A nylon layer may also be extruded over the insulation, such as in conventional THHN, THWN and THWN-2 constructions.

### TEST METHODS

Acid number (or "acid value") is a measure of the amount of free acid present in a compound. The acid number is the number of milligrams of potassium hydroxide required for the neutralization of free acid (fatty acid and/or other acid such as acetic acid, for example) present in one gram of a substance. The acid number is determined in accordance with German Standard DIN 53402 (mg KOH/g).

APHA color is measured using ColorQuest XE colorimeter, available from HunterLab, or equivalent; 20-mm transmission cell; HunterLab Universal software, version 4.10 or equivalent; Black and White color reference titles available from HunterLab, or equivalent; the measured APHA color value of deionized (DI) water is zero.

Density at 25 °C is determined in accordance with German Standard DIN 51 757 (g/cm³).

1. Dynamic storage modulus (G') and glass transition temperature (Tg) are determined by dynamic mechanical analysis (DMA) using a TA Instrument AR1000N Rheometer having DMA fixtures. The specimen is in the form of a rectangular solid and tested in tension mode. The temperature is varied from -100°C to + 160°C at a ramp rate of 5°C/min, and the test frequency is held constant at 6.283 rad/s (1 Hz). The storage and loss modulus of the sample, as well as the tan delta, are measured as a function of the temperature. The glass transition temperature (Tg) is determined from the peak tan delta measurement. Dynamic storage modulus (G') at -20°C is used as a measure of low temperature flexibility. The storage and loss modulus of viscoelastic materials are measures of the stored energy (representing the elastic portion) and the energy dissipated as heat (representing the viscous portion).

Hydroxyl Number (or hydroxyl value) is an indication of the degree of acetylation and is a measure of the number of hydroxyl groups present in a polymer. The hydroxyl number is the number of milligrams of potassium hydroxide required to neutralize the hydroxyl groups in one gram of polymer. The hydroxyl number is determined in accordance with German Standard DIN 53 240 (mg KOH/g).

Plasticizer compatibility in the polymeric composition is assessed by visual inspection of molded or extruded specimens aged at elevated temperatures (e.g., 113°C or 136°C) for defined lengths of time *(e.g.,* 7 days). The extruded specimens may be in the form of a wire (*i.e*., insulation extruded over conductor). The amount of exudate (spew) on surface after 7 days at 113°C or 136°C is rated as "none", "slight", "moderate", or "heavy".

Shore hardness is determined in accordance with ASTM D 2240.

Solution Temperature is the temperature at which a heterogeneous mixture of plasticizer and a PVC resin is observed to change to a single phase. Solution temperature is determined by immersing 1 gram PVC in 20 grams of plasticizer and increasing the temperature stepwise until the PVC is seen to be completely dissolved by observation under a microscope, in accordance with German Standard DIN 53 408 (°C).

Temperature of 5 % mass loss (°C) is determined using TG/DTA 220. The plasticizer specimen is heated from room temperature up to 600°C at 10 K/min under inert gas purge, and the appearing mass loss and thermal effects are recorded in thermograms. The higher the temperature for 5 % mass loss, the lower the volatility.

Tensile strength (TS), tensile strength retention (TSR), tensile elongation (TE), and tensile elongation retention (TER) ((at 5.08cm/min) (at 2 inch/min)) on unaged specimens, on specimens aged at 113°C or at 136°C for 168 hours, is determined in accordance with ASTM D638 and UL 1581/2556 either on dogbones cut from molded plaques or tubular insulations removed from coated conductors (extruded wires).

The term "UL 1581" is Underwriters Laboratories Reference Standard for Electrical Wires, Cables, and Flexible Cords. UL 1581 contains specific details for conductors, insulation, jackets and other coverings, and for methods of sample preparation, specimen selection and conditioning, and for measurement and calculation that are required in wire and cable standards.

Viscosity is determined in accordance with Standard ASTM D445, Brookfield-Viscosimeter at 25°C and/or 40°C.

Volume resistivity (Ohm-cm at 23°C) is measured with 500 volts direct current, in accordance with ASTM D257. Specimens of 8.9cm (3.5 inch) diameter are cut from 1016 µm (40 mil) thick molded plaques and tested using a Hewlett Packard 16008A Resistivity Cell connected to a Hewlett Packard 4329A High Resistance Meter.

Water content is determined in accordance with German Standard DIN 51 777 (%).

By way of example, and not by limitation, examples of the present disclosure are provided.

EXAMPLES

Example 1: Preparation of glycerin diacetate monolaurate (GDM)

41.4 g (0.45 mol) glycerin, 90.1g (0.45mol) lauric acid and 0.33g catalyst Tin(II)octoate are added to a 1 L one-neck glass flask. The flask is fixed to a rotation evaporator. After heating to 160 °C, the flask is flushed with nitrogen and evacuated (3 -5 times). The pressure is adjusted to approximately 10-20 mbar and the reaction is monitored via distillation of water. The reaction is stopped after 4 hours by cooling to room temperature.

101.07 g (0.99mol) acetic anhydride is added and the flask is heated to 100°C (under normal pressure). After 3 hours, the temperature is increased to 120°C for 1 hour. The temperature is increased again stepwise (30 min, 10°C, normal pressure) to 150°C and residual acetic acid and acetic anhydride is distilled off.

The product, glycerin diacetate monolaurate, is a light yellow liquid. Yield: 99% (calculated on glycerin). Its properties are as follows:

OH number: 0 mg KOH/g (DIN 53 240)

Acid number: 4.5 mg KOH/g (DIN 53 402)

Molecular weight: 358.4

Density, 25 °C (g/cm³): 0.994

Temp. of 5% mass loss (°C): 173

Water Content (%): 0.01

Example 1A: Preparation of glycerin diacetate monolaurate (GDM)

41.4 g (0.45 mol) glycerin, 90.1g (0.45mol) lauric acid and 0.33g catalyst Tin(II)octoate are added to a 1 L one-neck glass flask. The flask is fixed to a rotation evaporator. After heating to 160 °C, the flask is flushed with nitrogen and evacuated (3 -5 times). The pressure is adjusted to approximately 10-20 mbar and the reaction is monitored via distillation of water. The reaction is stopped after 4 hours by cooling to room temperature.

101.07 g (0.99mol) acetic anhydride is added and the flask is heated to 100°C (under normal pressure). After 3 hours, the temperature is increased to 120°C for 1 hour. The temperature is increased again stepwise (30 min, 10°C, normal pressure) to 150°C and residual acetic acid and acetic anhydride is distilled off.

The product, glycerin diacetate monolaurate, is a light yellow liquid. Yield: 99% (calculated on glycerin). Its properties are as follows:

OH number: 0 mg KOH/g (DIN 53 240)

Acid number: 2 mg KOH/g (DIN 53 402)

Molecular weight: 358.4

Density, 25 °C (g/cm³): 0.994

Temp. of 5% mass loss (°C): 175

Water Content (%): 0.04

The solution temperature of the glycerin diacetate monolaurate in PVC is determined in accordance with German Standard DIN 53 408, and is compared to the solution temperature of other plasticizers (see Table 1). The viscosity is measured with a Brookfield-Viscosimeter (25°C) in accordance with ASTM D445, and compared with literature data on other plasticizers Eastman Plasticizers Selector Chart, Publication L-174L, USA (June 2002). The other plasticizers examined include Grindsted^{®} Soft-N-Safe, diisodecyl phthalate (DIDP), dioctyl phthalate (DOP), Ultramoll^{®}IV and Ultramoll^{®}III poly(1,3-butanediol adipate) available from Lanxess Leverkusen Germany. Higher solution temperatures are generally considered desirable to ensure long-term retention of properties after heat aging, as long as they do not exceed 200°C. In this context, the glycerin diacetate monolaurate exhibits higher solution temperature than DIDP and DOP. Glycerin diacetate monolaurate is similar in solution temperature to the Ultramoll products and Grindsted^{®} Soft-N-Safe. The viscosity of glycerin diacetate monolaurate is even lower than that of the phthalate plasticizers and Grindsted^{®} Soft-N-Safe. Lower viscosity is generally considered desirable for the manufacture of the composition in the form of dry blend and/or pellets, as well as in the fabrication of the wire and cable construction, as it results in faster soaking and improved processability.

**Table 1**

| Plasticizer | Example 1: Glycerin Diacetate Monolaurate | Example 1A: Glycerin Diacetate Monolaurate | Grindsted® Soft-N-Safe (S-N-S) | DIDP | DOP | Ultramoll®IV | Ultramoll®III |
|---|---|---|---|---|---|---|---|
| Solution Temperature [°C] (DIN 53 408) | 165 | 158 | 151 | 141 | 126 | 167 | 179 |
| Viscosity [mPa s] at 25°C ASTM D445 | 23 | 25 | 100 | 79 | 56 | Not Available | Not Available |

Examples 2-3 and Comparative Samples 1-5

Thermoplastic compositions composed of blends of polyvinylchloride (PVC) with various plasticizers and additives are prepared. The primary plasticizers evaluated are glycerin diacetate monolaurate, diisodecyl phthalate (DIDP; product of TCI Japan), dioctyl phthalate (DOP; product of TCI America), triisononyl trimellitate (TINTM, from Sigma-Aldrich), and Vikoflex^{®} 7010 (epoxidized fatty acid methyl ester, e-FAME). The thermoplastic compositions contain 63.9 wt% PVC (OxyVinyls^{®} 240F), 23.8 wt% primary plasticizer, 6.4 wt% calcium carbonate (Hubercarb^{®} Q1T); 3.5 wt% epoxidized soybean oil (PLAS-CHEK^{®} 775 as secondary plasticizer), 2.1 wt% Dabco^{®} T-12 dibutyltin dilaurate (example 2 and comp. examples 1-3 only), 2.1 wt% Mark^{®} 6797 (example 3 and comp. examples 4-5 only), and 0.3 wt% Irganox^{®} 1076.

The following procedure is used to prepare the blends:
- Weigh the individual ingredients and mix all in a container using a spatula
- Use "40 cm³" Brabender mixing bowl with conventional rotors to make batches of each formulation at 40 rpm setting
- Do not purge mixing bowl with nitrogen
- Add mixture of PVC and other ingredients, and mix at 175°C for 5 minutes

The blend compositions are removed from the mixing bowl and are compression molded at 175°C for 5 minutes. Specimens are cut from 762 µm (30 mil) thick molded plaques for testing of all properties except volume resistivity. Volume resistivity is measured on specimens cut from 1016 µm (40 mil) thick molded plaques. Tensile strength and elongation are measured, at 5.08cm/min (2 inch/min), on fresh (*i.e*., unaged) specimens, and on specimens aged for 168 hours at 113°C or 136°C. Dynamic mechanical analysis is conducted over a range of-100°C to +160°C, at a rate of 5°C/min, and the glass transition temperature (Tg) is determined. The data are provided in Table 2.

**Table 2. Properties of Examples 2-3 and Comparative Samples 1-5**

| Primary Plasticizer | Shore A Hardness | Tg (°C) | Tensile Strength (unaged)-MPa (psi) | Tensile Strength Retention (%) after 113°C Aging | Tensile Strength Retention (%) after 136°C Aging | Tensile Elongation (unaged)-% | Tensile Elongation Retention (%) after 113°C Aging | Tensile Elongation Retention (%) after 136°C Aging | Vol Res (Ohm cm) at 23°C |
|---|---|---|---|---|---|---|---|---|---|
| Example 2: Glycerin Diacetate Monolaurate of Example 1 | 83.7 | 32.5 | 20.0 (2859) | 163 | 197 | 268 | 34 | 4 | |
| Example 3: Glycerin Diacetate Monolaurate of Example 1 | 86.9 ± 0.5 | 24.3 | 23.2 ± 0.48 (3312 ± 68) | 115 ± 11 | 156 ± 8 | 324 ± 8 | 75 ± 17 | 28 ± 5 | 1.14E + 11 |
| Comparative Sample I: DIDP | 90.0 | 38.6 | 22.2 (3177) | 106 | 203 | 234 | 69 | 4 | |
| Comparative Sample 2: DOP | 85.6 | 28.3 | 21.0 (2993) | 191 | 217 | 254 | 11 | 4 | |
| Comparative Sample 3: e-FAME | 81.5 | 15.2 | 18.3 (2607) | 217 | 242 | 249 | 8 | 6 | |
| Comparative Sample 4: DIDP | 91.1 ± 0.3 | 28.1 | 20.6 ± 2.0 (2947 ± 288) | 114 ± 30 | 171 ± 16 | 243 ± 32 | 97 ± 43 | 18 ± 16 | 7.54E+12 |
| Comparative Sample 5: TINTM | 91.3 ± 0.4 | 30.6 | 19.1 ± 2.2 (2732 ± 319) | 110 ± 3 | 107 ± 13 | 229 ± 38 | 111 ± 7 | 91 ± 17 | 7.04E+12 |

The composition of Example 2 exhibits properties that are within the desirable ranges obtained with comparative samples 1, 2 and 3. The composition of Example 3 exhibits properties comparable to those obtained with DIDP (comparative sample 4).

Examples 4-5 and Comparative Samples 6-7

The following procedure is used to prepare the thermoplastic compositions of Examples 4-5 and Comparative Samples (CS) 6-7. Blends of polyvinylchloride (PVC), additives and different plasticizers (or a plasticizer mixture) are prepared in Examples 4 to 5 and comparative samples 6 to 7. The thermoplastic compositions contain 60.3 wt% PVC (OxyVinyls^{®} 240F), 30.0 wt% plasticizer or plasticizer mixture, 6.4 wt% calcined clay (Satintone^{®} SP-33); 3.0 wt% calcium-zinc mixed metal heat stabilizer (Baeropan^{®} MC 90249 KA), and 0.3 wt% antioxidant (Irganox^{®} 1076). The plasticizers evaluated are: (a) GDM of Example 1A; (b) Mixture composed of 50 wt% GDM of Example 1A and 50 wt% PLAS-CHEK^{®} 775 ESO; (c) trioctyl trimellitate (TOTM; product of Sigma-Aldrich) and (d) diisodecyl phthalate (DIDP; product of Univar). The following procedure is used to prepare the blends:
- Preheat TOTM, DIDP, GDM, and epoxidized soybean oil to 60°C for at least 60 minutes, shake and make a 50/50 wt% GDM/ESO mixture (plasticizer composition)
- Make "solids mixture" by mixing all ingredients (except plasticizer and clay) in a container using a spatula
- Make 'dry blends' by soaking plasticizer into PVC powder, as follows
- Use "40 cm³" Brabender mixing bowl with sigma blades at 90°C to make batches of each formulation at 40 rpm setting
- Do not purge mixing bowl with nitrogen
- After 2 min warm-up, add "solids mixture". and mix for 30 seconds
- Add plasticizer and mix for 6 minutes, and also observe how long it takes for plasticizer absorption to be completed (i.e., the physical appearance of the powder to change from "wet" to "dry")
- Add filler (clay) and mix for 60 seconds
- Stop and remove "dry blend"
- The 'dry blend' is subsequently melt mixed using the following procedure:
   (a) Mix in a "40 cm³" Brabender mixing bowl with cam rotors at 40 rpm setting
   (b) Do not purge mixing bowl with nitrogen
   (c) Add 'dry blend', and mix at 180°C for 2 minutes

The blend composition is removed from the mixing bowl and is compression molded at 180°C for 5 minutes. Specimens are cut from, 762µm (30 mil) thick molded plaques for testing of all properties except volume resistivity and Shore hardness. Volume resistivity is measured on specimens cut from 1016 µm (40 mil) thick molded plaques. Shore A and Shore D are measured on 6350 µm (250 mil) thick molded specimens. The data are provided in Table 3.

The compositions of Examples 4 and 5 exhibit properties that are similar to or better than those obtained with comparative sample (CS) 6 and 7. In particular, the composition of Example 5 exhibits superior retention of tensile elongation after heat aging for 7 days at 136°C, comparable to that obtained with TOTM (comparative sample 7), as well as desirably low hardness and fast time for absorption of plasticizer.

**Table 3**

| Plasticizer † Mixture | Time for Complete Absorption of Plasticizer (min) | Hardness (Shore D) | Hardness (Shore A) | TS (Unaged)-MPa (psi) | TSR (%) after 113°C Aging | TSR (%) after 136°C Aging | TE (Unaged) -% | TER(%) after 113°C Aging | TER (%) after 136°C Aging | Weight Retained (%) after 7 Days at 136°C | Spew 136°C | Vol Res (Ohm cm) at 23°C |
|---|---|---|---|---|---|---|---|---|---|---|---|---|
| Example 4: GDM of Example 1A (100) | 2.75 | 27.1 ± 0.2 | 84.1 ± 0.4 | 19.8 ± 1.5 (2825 ± 215) | 162 ± 16 | 248 ± 24 | 293 ± 25 | 87 ± 12 | 1 ± 0 | 76.5 | None | 3.97E+14 |
| Example 5: GDM of Example 1A (50) ESO (50) | 2.75 | 30.0 ± 0.6 | 84.9 ± 0.8 | 22.6 ± 1.7 (3225 ± 248) | 146 ± 23 | 146 ± 17 | 279 ± 33 | 102 ± 15 | 84 ± 13 | 87.9 | Slight | 1.57E+15 |
| CS6 DIDP (100) | 3.25 | 32.6 ± 0.6 | 88.6 ± 0.7 | 24.4 ± 1.1 (3230 ± 44) | 125 ± 7 | 216 ± 21 | 291 ± 14 | 77 ± 3 | 1 ± 30 | 75.8 | None | 1.19E+16 |
| CS 7 TOTM (100) | 5.25 | 34.4 ± 0.8 | 90.1 ±0.8 | 22.6 ± 0.3 (3481 ± 150) | 102 ± 3 | 112 ± 8 | 301 ± 12 | 99 ± 6 | 92 ± 6 | 97.5 | None | 8.65E+15 |

| | | | | | | | | | | | | |
|---|---|---|---|---|---|---|---|---|---|---|---|---|
| ESO = Expoxidized soybean oil Spew 136°C = Exudate (spew) on surface after 7 days at 136°C Shore (A) = Shore A hardness ASTM D2240 TE = Tensile elongation, ASTM D638 TER = Tensile elongation retenion, ASTM D638 TER 113°C=Tensile elongation retention (%), specimen aged at 113°C for 168 hours TER 136°C= Tensile elongation retention (%), specimen aged at 136°C for 168 hours TS = Tensile strength, ASTM D638 TSR = Tensile strength retention, ASTM D638 TSR 113°C = Tensile strength retention (%), specimen aged at 113°C for 168 hours TSR 136°C = Tensile strength retention (%), specimen aged at 136°C for 168 hours Vol Res = Volume Resistivity (Ohm cm) @ 23°C Wt Ret. = Retained weight (%) after 7 days @ 136°C † = Weight percent for plasticizer components is shown in parenthesis. Weight percent is based on total weight of the plasticizer | | | | | | | | | | | | |

Comparative Example 6

A thermoplastic composition composed of blend of polyvinylchloride (PVC) with Grindsted Soft-N-Safe^{®} acetylated monoglyceride of hydrogenated castor oil (S-N-S; product of Danisco) as primary plasticizer is prepared. The thermoplastic composition contains 63.9 wt% PVC (OxyVinyls^{®} 240F), 23.8 wt% primary plasticizer, 6.4 wt% calcined clay (Polyfil^{®} 70 kaolin clay); 3.5 wt% epoxidized soybean oil (PLAS-CHEK^{®} 775 as secondary plasticizer), 2.1 wt% Mark^{®} 6797, and 0.3 wt% Irganox^{®} 1076.

The following procedure is used to prepare the thermoplastic composition of Comparative Example 6: - Weigh the individual ingredients and mix all in a container using a spatula
- Weigh the individual ingredients and mix all in a container using a spatula
- Use "40 cm³" Brabender mixing bowl with conventional rotors to make batches of each formulation at 40 rpm setting
- Do not purge mixing bowl with nitrogen
- Add mixture of PVC and other ingredients, and mix at 175°C for 5 minutes

The blend composition is removed from the mixing bowl and is compression molded at 175°C for 5 minutes. Specimens are cut from 762 µm (30 mil) thick molded plaques for testing of all properties except volume resistivity. Volume resistivity is measured on specimens cut from 1016 µm (40 mil) thick molded plaques. Tensile strength and elongation are measured, at 5.08cm/min (2 inch/min), on fresh (*i.e*., unaged) specimens, and on specimens aged for 168 hours at 113°C or 136°C. Dynamic mechanical analysis is conducted over a range of-100°C to +160°C, at a rate of 5°C/min, and the Tg and modulus at -20°C are determined. The data are provided in Table 4.

**Table 4. Properties of Example 6**

| Primary Plasticizer | DM (Pa) | Shore (A) | T_{g} (°C) | TS (unaged) - Mpa (psi) | TSR (%) after 113°C Aging | TE (unaged) - % | TER (%) after 113°C Aging | WR (%) after 7 days @ 113°C | VR (Ohms cm) at 23°C |
|---|---|---|---|---|---|---|---|---|---|
| Comparative Ex. 6 S-N-S | 9.71E+08 | 89.3 | 25.7 | 16.4 ± 0.02 (2340±3) | 112±3 | 141±13 | 89±11 | 98.0 | 4.63E+11 |

| | | | | | | | | | |
|---|---|---|---|---|---|---|---|---|---|
| DM= Dynamic Modulus at -20°C (Pa) Shore (A) = Shore A hardness ASTM D2240 TE = tensile elongation, ASTM D638 TER = Tensile elongation retention, ASTM D638 TER 113°C = Tensile elongation retention (%), specimen aged at 113°C for 168 hours T_{g} = Glass transition temperature (°C) TS = Tensile strength, ASTM D638 TSR = Tensile strength retention, ASTM D638 TSR 113°C = Tensile strength retention, (%), specimen aged at 113°C for 168 hours VR = Volume Resistivity (Ohms cm) at 23°C WR = Weight Retained (%) after 7 days | | | | | | | | | |

Comparative Example 6 exhibits excellent properties, including satisfactory heat aging performance at elevated temperature.

## Claims

1. A coated conductor comprising:
a conductor; and
a coating on the conductor, the coating comprising a vinyl chloride resin and a plasticizer composition comprising glycerin diacetate monolaurate and optionally an epoxidized fatty acid ester or other plasticizer.

2. The coated conductor of claim 1 wherein the glycerin diacetate monolaurate has a hydroxyl number from 0 to less than 100.

3. The coated conductor of claim 2 wherein the glycerin diacetate monolaurate has a hydroxyl number from 0 to less than 15.

4. The coated conductor of any of claims 2-3 wherein the glycerin diacetate monolaurate has a hydroxyl number from 0 to 10.

5. The coated conductor of any of claims 2-4 comprising a glycerin diacetate monolaurate having a hydroxyl number from 0 to less than 100; and epoxidized soybean oil.

6. The coated conductor of any of claims 2 to 4 wherein the plasticizer composition comprises from 30 wt% to 99 wt% glycerin diacetate monolaurate and from 1 wt% to 70 wt% epoxidized fatty acid ester.

7. The coated conductor of claim 6 wherein the epoxidized fatty acid ester is selected from the group consisting of epoxidized soybean oil, epoxidized propylene glycol dioleate, epoxidized palm oil, epoxidized linseed oil, epoxidized fatty acid methyl esters, epoxidized derivatives of each of the foregoing, and combinations thereof.

8. The coated conductor of claim 1 wherein the coating has a Shore A hardness as determined in accordance with ASTm D 2240 of from 60 to 100.

9. The coated conductor of claim 1 wherein the coating contains from 30 wt% to 90 wt% polyvinyl chloride and from 70 wt% to 10 wt% plasticizer composition.

10. The coated conductor of claim 1 wherein the plasticizer composition comprises a second plasticizer.

## Patentansprüche

1. Ein beschichteter Leiter, der Folgendes beinhaltet:
einen Leiter; und
eine Beschichtung auf dem Leiter, wobei die Beschichtung ein Vinylchloridharz und eine Weichmacherzusammensetzung beinhaltet, die Glycerindiacetatmonolaurat und optional einen epoxidierten Fettsäureester oder anderen Weichmacher beinhaltet.

2. Beschichteter Leiter gemäß Anspruch 1, wobei das Glycerindiacetatmonolaurat eine Hydroxylzahl von 0 bis weniger als 100 aufweist.

3. Beschichteter Leiter gemäß Anspruch 2, wobei das Glycerindiacetatmonolaurat eine Hydroxylzahl von 0 bis weniger als 15 aufweist.

4. Beschichteter Leiter gemäß einem der Ansprüche 2-3, wobei das Glycerindiacetatmonolaurat eine Hydroxylzahl von 0 bis 10 aufweist.

5. Beschichteter Leiter gemäß einem der Ansprüche 2-4, der ein Glycerindiacetatmonolaurat mit einer Hydroxylzahl von 0 bis weniger als 100 und epoxidiertes Sojabohnenöl beinhaltet.

6. Beschichteter Leiter gemäß einem der Ansprüche 2 bis 4, wobei die Weichmacherzusammensetzung von 30 Gew.-% bis 99 Gew.-% Glycerindiacetatmonolaurat und von 1 Gew.-% bis 70 Gew.-% epoxidierten Fettsäureester beinhaltet.

7. Beschichteter Leiter gemäß Anspruch 6, wobei der epoxidierte Fettsäureester aus der Gruppe ausgewählt ist, die aus epoxidiertem Sojabohnenöl, epoxidiertem Propylenglycoldioleat, epoxidiertem Palmöl, epoxidiertem Leinöl, epoxidierten Fettsäuremethylestern, epoxidierten Derivaten von jedem der oben Genannten und Kombinationen davon besteht.

8. Beschichteter Leiter gemäß Anspruch 1, wobei die Beschichtung eine gemäß ASTM D 2240 bestimmte Shore-A-Härte von 60 bis 100 aufweist.

9. Beschichteter Leiter gemäß Anspruch 1, wobei die Beschichtung von 30 Gew.-% bis 90 Gew.-% Polyvinylchlorid und von 70 Gew.-% bis 10 Gew.-% Weichmacherzusammensetzung enthält.

10. Beschichteter Leiter gemäß Anspruch 1, wobei die Weichmacherzusammensetzung einen zweiten Weichmacher beinhaltet.

## Revendications

1. Un conducteur enrobé comprenant :
un conducteur ; et
un enrobage sur le conducteur, l'enrobage comprenant une résine de chlorure de vinyle et une composition de plastifiant comprenant du monolaurate diacétate de glycérine et facultativement un ester d'acide gras époxydé ou un autre plastifiant.

2. Le conducteur enrobé de la revendication 1 dans lequel le monolaurate diacétate de glycérine a un nombre d'hydroxyle allant de 0 à moins de 100.

3. Le conducteur enrobé de la revendication 2 dans lequel le monolaurate diacétate de glycérine a un nombre d'hydroxyle allant de 0 à moins de 15.

4. Le conducteur enrobé de n'importe lesquelles des revendications 2 à 3 dans lequel le monolaurate diacétate de glycérine a un nombre d'hydroxyle allant de 0 à 10.

5. Le conducteur enrobé de n'importe lesquelles des revendications 2 à 4 comprenant un monolaurate diacétate de glycérine ayant un nombre d'hydroxyle allant de 0 à moins de 100 ; et de l'huile de soja époxydée.

6. Le conducteur enrobé de n'importe lesquelles des revendications 2 à 4 dans lequel la composition de plastifiant comprend de 30 % en poids à 99 % en poids de monolaurate diacétate de glycérine et de 1 % en poids à 70 % en poids d'ester d'acide gras époxydé.

7. Le conducteur enrobé de la revendication 6 dans lequel l'ester d'acide gras époxydé est sélectionné dans le groupe consistant en l'huile de soja époxydée, le dioléate de propylène glycol époxydé, l'huile de palme époxydée, l'huile de lin époxydée, des esters méthyliques d'acide gras époxydés, des dérivés époxydés de chacun des éléments précédents, et des combinaisons de ceux-ci.

8. Le conducteur enrobé de la revendication 1 dans lequel l'enrobage a une dureté Shore A telle que déterminée conformément à l'ASTM D 2240 allant de 60 à 100.

9. Le conducteur enrobé de la revendication 1 dans lequel l'enrobage contient de 30 % en poids à 90 % en poids de chlorure de polyvinyle et de 70 % en poids à 10 % en poids de composition de plastifiant.

10. Le conducteur enrobé de la revendication 1 dans lequel la composition de plastifiant comprend un deuxième plastifiant.
